Europäisches Patentamt

European Patent Office

Office européen des brevets

(11) Publication number: **0 084 699**
A1

# EUROPEAN PATENT APPLICATION

(21) Application number: 82302259.5

(51) Int. Cl.³: **B 67 D 3/04,** F 16 K 7/06

(22) Date of filing: 30.04.82

(30) Priority: 22.01.82 GB 8201880

(43) Date of publication of application: 03.08.83
Bulletin 83/31

(84) Designated Contracting States: AT BE CH DE FR IT LI LU NL SE

(71) Applicant: RICHARD MILLINGTON AND COMPANY LIMITED, Stancliffe Works Waterfall, Blackburn Lancashire BB2 2QR (GB)

(72) Inventor: Millington, Arthur Richard, Lower Studlehurst Farm, Osbaldeston Blackburn Lancashire (GB)

(74) Representative: Low, Peter John et al, WILSON, GUNN & ELLIS 41-51 Royal Exchange Cross Street, Manchester, M2 7DB (GB)

(54) Beverage dispensing apparatus.

(57) A liquid dispensing apparatus comprises a collapsible tubing (8) disposed in a duct (1) and a member (3) is arranged for sliding movement in a bore (10) communicating with said duct (1) and cam (6) is arranged upon actuation to urge said member (3) into said duct (1). This apparatus is particularly applicable to dispensing carbonated beverages such as beer or lager.

0084699

- 1 -

LIQUID DISPENSING APPARATUS

This invention relates to liquid dispensing apparatus and in particular to valves for controlling a flow of beverage. The invention finds particular application in dispensing carbonated beverages such as beer and lager.

Previously known apparatus for dispensing liquids such as beverages incorporate valves having discrete components such as pistons and valve seats which, in use, are immersed in the liquid beverage and which may occlude dirt or other undersirable deposits. Such valves may only be cleared with difficulty, for example by dismantling the valve or by use of chemical cleansing reagents.

According to the present invention a liquid dispensing apparatus is characterised in that collapsible tubing 8 is disposed in a duct 1 and a member 3 is arranged for sliding movement in a bore 10 communicating with said duct 1 and means arranged upon actuation to urge said member 3 into said duct 1.

Preferably the said means comprises a cam.

Preferably the apparatus is arranged so that said tubing may be completely collapsed thereby to prevent flow of the beverage.

Spring means may be provided to urge the member out of the duct. The member may, therefore, move to release the tubing when the cam does not urge the member into the duct.

The member is preferably provided with a rounded portion which may compress the tube against a correspondingly rounded wall of the duct.

The cam may be secured to a rotatably mounted structure and arranged to actuate the member when the structure is rotated.

Apparatus in accordance with the present invention is particularly suited for dispensing highly pressurised beverages such as beer or lager. The apparatus may be adapted by altering the bore of the collapsible tubing to suit a particular pressure, for example high pressures may be dispensed through narrow tubing.

When dispensing of highly pressurised beverages it is important that the drop in hydrodynamic pressure at the outlet is sufficient to prevent excessive effervescence. This may be achieved by incorporating an additional length of tubing within the apparatus, for example, a portion of the tubing may be coiled together.

Preferably the collapsible tubing is supported externally along the entire length so as to minimise stress caused by the internal hydrodynamic pressure. Apparatus in accordance with this invention has many advantages. The bore of the collapsible tubing is easy to clean and does not include any cavities which may occlude dirt such as are present in conventional apparatus. The present apparatus may be cleaned with a bottle brush or similar device.

The invention is now further described by means of an example with reference to Figures 1 to 5 of the accompanying drawings, of which:-

Fig. 1        is a cross-section of an arrangement in accordance with the invention;

Fig. 2        is a part cross-section along the line A-A of Fig. 1;

Fig. 3        shows the arrangement of Figure 1 in another position;

Fig. 4        is a part cross-section along the line B-B of Figure 1; and

Fig. 5        is a cross-section of a tap incorporating the valve shown in Figure 1.

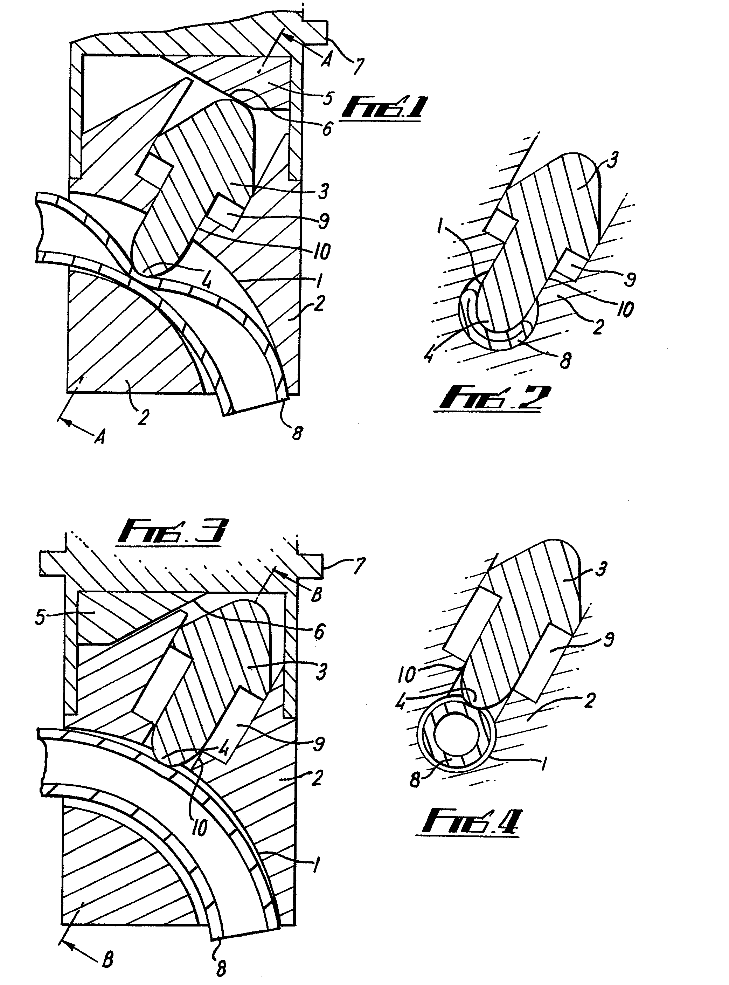

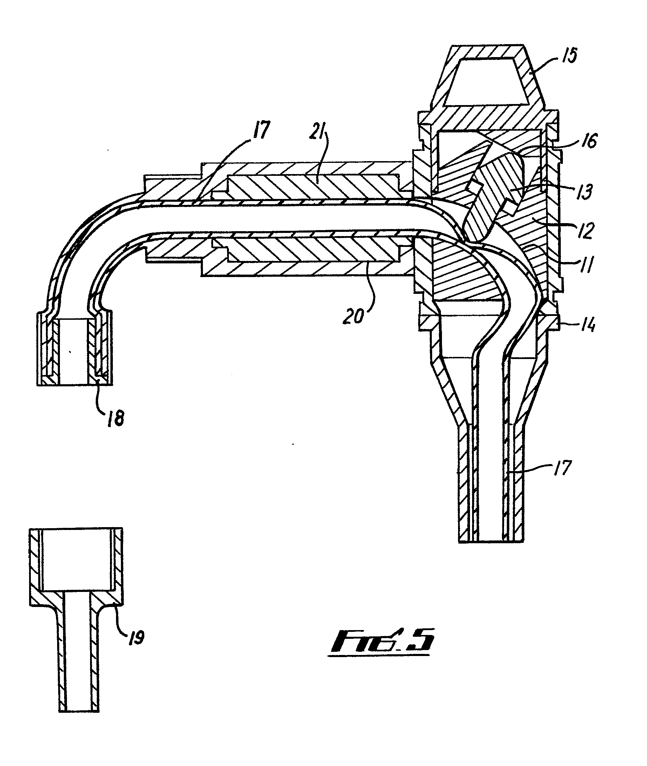

The same reference numerals have been used to indicate corresponding components in each of the Figures. Figures 1 to 4 show a beer dispensing valve comprising a collapsible plastics tube 8 disposed in a duct 1 in a block 2. A member 3 is disposed in a bore 10 in the block 2 and is arranged for sliding movement into and out of the duct 1. The member 3 is provided with a rounded end 4 which may cooperate with the generally cylindrical wall of the duct 1 to compress and close the tube 8. This is shown in Figures 1 and 2. The member 3 is urged against the tube 8 by a cam 6 which is secured to a rotatable structure 7. Rotation of the structure 7 may move the cam 6 out of contact with the member 3 thereby releasing the tube 8 as shown in Figures 3 and 4. A helical spring (not shown) may be provided in the cavity 9 to assist release of the tube.

The cam 6 may in alternative embodiments of the invention be attached to a slideable or otherwise arranged structure rather than the rotatably mounted structure 7 disclosed above.

It has been found that collapse of the tubing 8 into a generally semicircular configuration is advantageous in that the flow of liquid may be stopped more effectively than if the tube is collapsed into a generally flat configuration.

Figure 5 shows a tap incorporating a valve as shown in Figure 1 and comprising a duct 11 in a block 12 with a member 13 disposed in a bore in the block communicating with the duct.  The tap body 14 supports a rotatable member 15 part of which comprises the cam 16.  Rotation of the member 15 therefore causes the valve to open or close as desired.

Collapsible tubing 17 extends throughout the tap providing a hygenic and easily cleaned passageway for a beverage.  The tubing 17 is sealed to the inlet of the tap by means of a collar 18 which serves to prevent liquid from entering between the tubing and the body 14 of the tap.  An attachment 19, shown detatched from the tap, is used to secure the latter to a hose connected to a supply of beverage.

A cylindrical chamber 20 is provided upstream of the valve.  The tubing 17 may be coiled into a helix in the chamber 20 to provide an elongated flow path within the tap.  This may serve to reduce the hydrodynamic pressure at the valve and may thereby improve the dispensing of highly pressurised beverages.  In the illustrated tap, the tube 17 is not coiled and a filling material 21 fills the chamber 20 to support the tubing 17. Tubing 17 of different bores may be used with taps incorporating valves in accordance with this invention, thereby facilitating optimum dispensing of beverages supplied at different pressures.

Claims:

1.    A liquid dispensing apparatus
characterised in
than collapsible tubing 8 is disposed in a duct 1 and
a member 3 is arranged for sliding movement in a bore
10 communicating with said duct 1 and a member b is
arranged upon actuation to urge said member 3 into
said duct 1.

2.    A liquid dispensing apparatus
characterised in
that the member 6 comprises a cam.

3.    A liquid dispensing apparatus as claimed in claim
1 or 2
characterised in
that the tubing 8 may be collapsed to prevent flow of
a beverage.

4.    A liquid dispensing apparatus as claimed in claim 3,
characterised in
that the tubing 8 may be collapsed in use of the apparatus
by compression between two surfaces having a rounded
profile in cross-section.

5.    A liquid dispensing apparatus as claimed in any
preceding claim,
characterised in
that the member 3 is provided with a rounded portion 4
arranged to cooperate in use with a rounded wall of the
duct 1.

0084699

- 6 -

6.    A liquid dispensing apparatus as claimed in
any preceding claim,
characterised in
that the member 6 is rotatably mounted and arranged
to urge the member 3 into the duct 1 when rotated.

7.    A liquid dispensing apparatus as claimed in any
preceding claim
characterised in
that a spring is arranged to urge the member 3 out of
the duct 1.

8.    A liquid dispensing apparatus as claimed in any
preceding claim
characterised in
that the collapsible tubing 8 is coiled.

9.    A liquid dispensing apparatus as claimed in any
preceding claim for use in dispensing carbonated
beverages.

10.    A tap incorporating apparatus as claimed in any
preceding claim.

0084699

½

FIG.1

FIG.2

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-3 012 336 (TURNWALD) *The whole document* | 1-6,9 10 | B 67 D 3/04 F 16 K 7/06 |
| Y | US-A-2 660 395 (CEMENT GUN) *Column 2, line 8, column 3, line 26; figures 1-4* | 1-6,9 10 | |

TECHNICAL FIELDS SEARCHED (Int. Cl. 3)

B 67 D
F 16 K

The present search report has been drawn up for all claims

| Place of search | Date of completion of the search | Examiner |
|---|---|---|
| THE HAGUE | 28-04-1983 | VROMMAN L.E.S. |